# EUROPÄISCHE PATENTSCHRIFT

(11) **EP 1 885 956 B1**
(45) Veröffentlichungstag und Bekanntmachung des Hinweises auf die Patenterteilung: **15.10.2014**
(21) Anmeldenummer: 06741007.6
(22) Anmeldetag: 23.05.2006
(51) Int. Cl.: E01F 9/00

(54) **BELEUCHTUNG FÜR EINE AUSSENANLAGE MIT EINEM ENERGIEVERSORGUNGSSYSTEM**
LIGHTING FOR OUTDOOR SPACES WITH AN ENERGY SUPPLY SYSTEM
ECLAIRAGE POUR INSTALLATION EXTERIEURE AVEC UN SYSTEME D'ALIMENTATION D'ENERGIE

(30) Priorität: 23.05.2005 AT 8712005
(43) Veröffentlichungstag der Anmeldung: 13.02.2008
(73) Patentinhaber: Stumpfl, Reinhold, 4702 Wallern (AT)
(72) Erfinder: Stumpfl, Reinhold, 4702 Wallern (AT)
(74) Vertreter: Ofner, Clemens
(86) Internationale Anmeldenummer: PCT/AT2006/000208
(87) Internationale Veröffentlichungsnummer: WO 2006/125235

(56) Entgegenhaltungen:
- EP-A- 0 134 266
- WO-A-99/13187
- GB-A- 1 242 101
- US-A- 5 499 887
- US-A- 5 726 507
- US-A1- 2005 024 857

## Beschreibung

Die Erfindung betrifft eine Beleuchtung für eine Außenanlage mit einem Energieversorgungssystem zur Versorgung eines Verbrauchers mit elektrischem Strom, umfassend zumindest ein Energieversorgungsmodul, wobei das Energieversorgungsmodul bevorzugt mit einem Gehäuse zum Unterflureinbau ausgebildet ist und im Energieverbrauchsmodul ein Datenempfangsmodul angeordnet ist bzw. ein Datenempfangsmodul durch das Energieverbrauchsmodul gebildet ist, wobei zur induktiven Datenübertragung zwischen dem Energieversorgungsmodul und dem Energieverbrauchsmodul sowohl das Energieversorgungsmodul als auch das Energieverbrauchsmodul mit je zumindest einer elektrischen Wicklung eines Transformators ausgestattet ist oder zur Datenübertragung ein opto-elektronisches Bauelement mit einem lichtemittierenden Bauteil im Energieversorgungsmodul und einem lichtempfangenden Bauteil im Energieverbrauchsmodul angeordnet ist.

Pollerleuchten für den Außenbereich sind zur Gartengestaltung bzw. zur Gestaltung des Eingangsbereiches eines Hauses sehr häufig anzutreffen. Sie sind ein probates Mittel um Wege oder dgl. auszuleuchten. Allerdings treten immer wieder Probleme auf, wenn die Flächen, auf denen diese Leuchten aufgestellt sind, bearbeitet werden sollen. So z.B. wenn diese Leuchten im Garten platziert sind, da beim Rasenmähen ständig um diese Leuchten herum gemäht werden muss, wobei in der Regel um die Leuchten das Gras stehen bleibt, da mit herkömmlichen Rasenmähern das Mähen bis an die Leuchte nicht möglich ist. D.h. es ist eine Nachbearbeitung dieser Stellen erforderlich.

Aus der EP 0 134 266 A ist eine Leuchtsäule für den Straßenverkehr mit einem die Beleuchtungselemente bekannt, mit einem die Leuchtsäule von einem rammenden Fahrzeug relativ leicht wegdrückbaren oder wegschiebaren Oberteil, mit einem in den Boden eingelassenen, den Ober teil tragenden und ein für eine elektrische Stromzuführung vorgesehenes Kabel aufnehmenden Sockelteil, sowie mit einem beim Rammen der Leuchtsäule die elektrische Versorgung der Beleuchtungselemente unterbrechenden, leicht lösbaren zweiteiligen Verbindungselement, das aus einem induktiven Koppler mit einem in zwei Hälften geschnittenen, mindestens eine Primärwicklung und mindestens eine Sekundärwicklung tragenden Eisenkern besteht, wobei die eine Kernhälfte mit der Primärwicklung am Sockelteil und die andere Kernhälfte mit der Sekundärwicklung am Oberteil befestigt und durch die Befestigungsmittel des Oberteils am Sockelteil zusammengehalten sind. Die am Sockelteil befestigte Kernhälfte und die Primärwicklung kann in einem die Öffnung des Sockelteils bei entferntem Oberteil verschließenden Kunststoff eingebettet sind.

Es ist die Aufgabe der vorliegenden Erfindung, eine verbesserte Beleuchtung für eine Außenanlage mit einem Energieversorgungssystem zu schaffen, insbesondere die Einsatzmöglichkeiten derselben zu vergrößern.

Diese Aufgabe wird dadurch gelöst, dass das Energieverbrauchsmodul lösbar und elektrisch entkoppelt mit dem Energieversorgungsmodul verbunden bzw. verbindbar ist.

Ein derartiger Aufbau ermöglicht es, dass an die Energieversorgung angeschlossene Verbraucher jederzeit entfernt werden können, sodass im wesentlichen eine zumindest annähernd ebene Fläche nach deren Entfernung zurück bleibt und zum anderen ist durch die elektrische Entkoppelung der beiden Module nicht nur die Entfernbarkeit des im Energieverbrauchsmoduls einfacher, da keine elektrischen Verbindungen gesondert getrennt werden müssen, sondern ist es damit möglich, das Energieversorgungsmodul vollständig einzukapseln, sodass dieses vor Spritzwasser bzw. generell Feuchtigkeit geschützt ist und damit keine Gefahren eines Kurzschlusses besteht. Durch die modulartige Bauweise ist es zudem möglich, unterschiedlichste Energieverbrauchsmodule mit dem Energieversorgungsmodul je nach Bedarf zu verbinden.

Durch die Anordnung eines Datenempfangsmoduls ist es möglich, mit diesem Energieversorgungssystem nicht nur die Versorgung des Außenbereiches mit elektrischer Energie zu ermöglichen, sondern können damit gleichzeitig Daten an einen Verbraucher übertragen werden. Beispielsweise können auf diese Weise Musik oder optische Daten, wie z.B. Farbmuster, Farbabfolgen für z.B. Leuchtdioden, d.h. die Anspeisung dieser Leuchtmittel mit elektrischer Energie in einer bestimmten Reihenfolge, aber auch Bilddaten, etc. übertragen werden. Damit wird es möglich, dieses System auch als Warnsystem oder dgl. zu verwenden. Für den Fall, dass Ton- bzw. Bilddaten übertragen werden, besteht die Möglichkeit, dass im Energieverbrauchsmodul beispielsweise ein Lautsprecher oder ein Bildschirm angeordnet ist, sodass die übertragenen Daten für einen Benutzer sofort zur Verfügung stehen.

Zur Datenübertragung kann auch ein Optokoppler, also ein opto-elektronisches Bauelement mit einem lichtemittierenden und einem lichtempfangenden Bauteil, angeordnet ist, sodass die Datenübertragung nicht nur induktiv erfolgen muss, sondern auch eine andere Möglichkeit zur Verfügung steht, beispielsweise um gleichzeitig Energie und Daten zu übertragen. Auch mit dem Optokoppler ist es möglich die Signalübertragung bei galvanischer Trennung durchzuführen. Dabei ist es z.B. möglich, dass das lichtemittierende Bauteil, z.B. eine Leuchtdiode als Sender, im Energieversorgungsmodul angeordnet ist und das lichtempfangende Bauteil, z.B. eine Fotodiode, ein Fototransistor oder ein Fotothyristor als Empfänger, im Energieverbrauchsmodul angeordnet ist.

Um die Verankerung des Gehäuses des Energieversorgungsmoduls im Boden zu verstärken, ist es möglich, an einer Außenseite des Gehäuses zumindest einen, bevorzugt umlaufenden, über die Außenseite seitlich vorragenden Steg anzuordnen, sodass also dieser Steg in das Hinterfüllungsmaterial hineinragt.

Alternativ oder zusätzlich ist es möglich, wenn das Energieversorgungsmodul in befestigte Flächen eingelassen wird, insbesondere betonierten Flächen, an diesem Gehäuse zumindest einen Betonanker anzuordnen, um eine feste Verbindung zwischen dem Gehäuse und dem Untergrund herzustellen.

Um diesen Effekt weiter zu verstärken, kann der zumindest eine Betonanker zumindest einen Durchbruch aufweisen, in welchen der Beton bzw. allgemein das hydraulische Bindemittel im unverfestigten Zustand eintreten bzw. diesen durchfließen kann.

Zur weiteren Erhöhung der Spritzwassersicherheit bzw. um das Energieversorgungsmodul besser vor Nässe, also auch vor Regen, zu schützen, ist es möglich, dieses mit einem Abdeckelement zu versehen. Damit kann auch eine Verschmutzung der Innenteile, insbesondere der Energieübertragungsflächen, des Energieversorgungsmoduls verhindert werden.

Dabei ist es von Vorteil, wenn dieses Abdeckelement selbstverschließend ausgebildet ist, beispielsweise dass das Abdeckelement mehrere Abdeckflügel aufweist, die ringblendenartig zusammenwirken, sodass sich das Energieversorgungsmodul mit der Entfernung des Energieverbrauchsmoduls selbsttätig verschließt und damit die manuelle Manipulation verringert und die Verbraucherfreundlichkeit erhöht werden kann.

Das Gehäuse und/oder das Abdeckelement bestehen bevorzugt aus einem begehbaren bzw. befahrbaren Werkstoff mit den entsprechenden Festigkeitseigenschaften, wodurch die Bruchgefahr des Gehäuses bzw. Abdeckelementes bei Gewichtsbelastung auch dann verhindert werden kann, wenn dieses Gehäuse bzw. das Energieversorgungsmodul nicht vollflächig im Untergrund verankert ist.

Das Energieverbrauchsmodul kann als Leuchtmodul und/oder als Steckdosenmodul ausgebildet sein, sodass also nicht nur die Beleuchtung von Außenbereichen sondern auch generell die Stromversorgung in diesem Bereich ermöglicht wird.

Es ist auch möglich, das Energieverbrauchsmodul mit zumindest einer eigenen Stromerzeugungseinrichtung zu versehen. Diese kann dabei als Solarmodul ausgebildet sein, um den Energieverbrauch von einer primären Energiequelle, mit der das Energieversorgungsmodul verbunden ist, zu reduzieren. Andererseits ist es möglich, diese Stromerzeugungseinrichtung mit mechanischen Komponenten aufzubauen, sodass also vom Energieversorgungsmodul kinetische Energie an das Energieverbrauchsmodul übertragen und in diesem in elektrische Energie umgewandelt wird, wodurch zwar eine aufwendigere Energieübertragung, die gegebenenfalls mit größeren Verlusten verbunden ist, zur Verfügung gestellt wird, diese jedoch weitestgehend unempfindlich gegen Feuchtigkeit, wie z.B. Spritzwasser bzw. Regen, auch ohne zusätzliche Kapselung ist.

Von Vorteil ist es, wenn das Energieversorgungsmodul zur Hochfrequenzübertragung der Energie, und damit auch der Daten, ausgebildet ist, wodurch die Übertragungsverluste der Energie vom Energieversorgungsmodul auf das Energieverbrauchsmodul verringert werden können. Unter Hochfrequenz im Sinne der Erfindung werden Frequenzen ab 5 kHz verstanden, wobei die obere Grenze variabel ist, beispielsweise bei 1 GHz liegt.

Ebenso ist es aber auch möglich, dass das Energieversorgungsmodul zur Niederfrequenzübertragung von Energie und/oder Daten ausgebildet ist. Unter Niederfrequenz im Sinne der Erfindung werden Frequenzen im Bereich von ca. 100 Hz bis ca. 1000 Hz verstanden.

Vorteilhaft für Handhabbarkeit des Energieversorgungssystems, insbesondere die Entfernbarkeit des Energieverbrauchsmoduls, ist es, wenn das Energieversorgungsmodul rein mechanisch mit dem Energieverbrauchsmodul verbunden ist, wie beispielsweise über einen Bajonettverschluss, eine Schnappverbindung, eine Rastverbindung, eine Schraubverbindung oder einen Schnellspannverschluss. Es kann damit die Verbindung zwischen dem Energieversorgungsmodul und dem Energieverbrauchsmodul rasch und ohne zusätzliches Werkzeug gelöst werden.

Ebenso einfach und rasch kann die Verbindung bzw. Entfernbarkeit des Energieverbrauchsmoduls vom Energieversorgungsmodul bewerkstelligt werden, wenn an einer dem Energieverbrauchsmodul zugekehrten Oberfläche des Energieversorgungsmoduls zumindest ein Magnet angeordnet ist und somit also die Halterung des Energieverbrauchsmoduls im Energieversorgungsmodul über magnetische Kräfte erfolgt.

Es ist aber auch möglich, das Energieverbrauchsmodul in das Energieversorgungsmodul einsteckbar auszubilden, wobei es in diesem Fall von Vorteil ist, wenn über zumindest einen Teilbereich des Einsteckbereiches sich die Durchmesser der Einstecköffnung des Energieversorgungsmoduls und des einzusteckenden Teils des Energieverbrauchsmoduls nur geringfügig voneinander unterscheiden, sodass eine Art Reibschluss zwischen diesen beiden Modulen entsteht und damit die Halterung verstärkt wird.

Im Leuchtmodul kann zumindest ein Leuchtmittel in Form eines LED, einer Glühlampe, einer Xenonlampe, einer Energiesparlampe oder einer Halogenlampe angeordnet sein, sodass also das Leuchtmodul mit unterschiedlichster Lichtausbeute für verschiedenste Einsatzfälle ausgestattet werden kann.

Des Weiteren ist es möglich, im Leuchtmodul mehrere Leuchtmittel mit unterschiedlicher Farbe anzuordnen, um beispielsweise dieses Leuchtmodul mit den Signalfarben Grün, Orange, Rot auszustatten, wodurch das Energieversorgungssystem auch als Signalsystem im Straßenverkehr verwendet werden kann.

Es kann weiters von Vorteil sein, wenn im Leuchtmodul zumindest ein Datenspeicher angeordnet ist, in dem Daten bzw. ein Programm zur Steuerung bzw. Regelung der Farbabfolge bei Verwendung mehrerer Leuchtmittel unterschiedlicher Farbe hinterlegt ist. Andererseits ist es damit möglich, insbesondere wenn im Leuchtmodul ein Sensor zur Erfassung von Objekten angeordnet ist, das Energieversorgungssystem z.B. als Parkleitsystem einzusetzen und beispielsweise bei vollem Parkplatz einfahrenden Fahrzeugen die Einfahrt mit rotem Licht zu verwehren.

Im Leuchtmodul können Bewegungsmelder vorgesehen sein, um den Energieverbrauch auf jene Zeiten zu reduzieren, in denen Licht benötigt wird.

Von Vorteil ist es auch, wenn das Leuchtmodul zwischen dem Verbindungsbereich mit dem Energieversorgungsmodul und dem Leuchtmittel einen elastisch nachgebenden Bereich aufweist, sodass beispielsweise bei Verwendung des Energieversorgungssystems als Verkehrsleitsystem dieses besser vor Beschädigung durch anfahrende Fahrzeuge geschützt werden kann.

Im Energieverbrauchsmodul kann ein Energiespeicher, z.B. ein Akkumulator, angeordnet sein, sodass dieses Modul mobiler ist, und seine Funktion auch noch nach seiner Entfernung aus dem Energieversorgungsmodul zumindest teilweise erfüllen kann.

Zum besseren Verständnis der Erfindung wird diese anhand der nachfolgenden, die Erfinder nicht beschränkenden Figuren, näher erläutert.

Es zeigen jeweils in stark schematisch vereinfachter Darstellung:
- Fig. 1: eine erste Ausführungsvariante des Energieversorgungssystems mit induktiver Energieübertragung;
- Fig. 2: das Energieversorgungsmodul mit einem Betonanker;
- Fig. 3: eine andere Ausführungsvariante des Energieversorgungsmoduls;
- Fig. 4: eine Draufsicht auf das Energieversorgungsmodul mit einem Abdeckelement;
- Fig. 5: ein mit dem Energieversorgungsmodul verschraubbares Energieverbrauchsmodul;
- Fig. 6: eine Ausführungsvariante des Energieversorgungssystems mit Stromerzeugung im Energieverbrauchsmodul.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

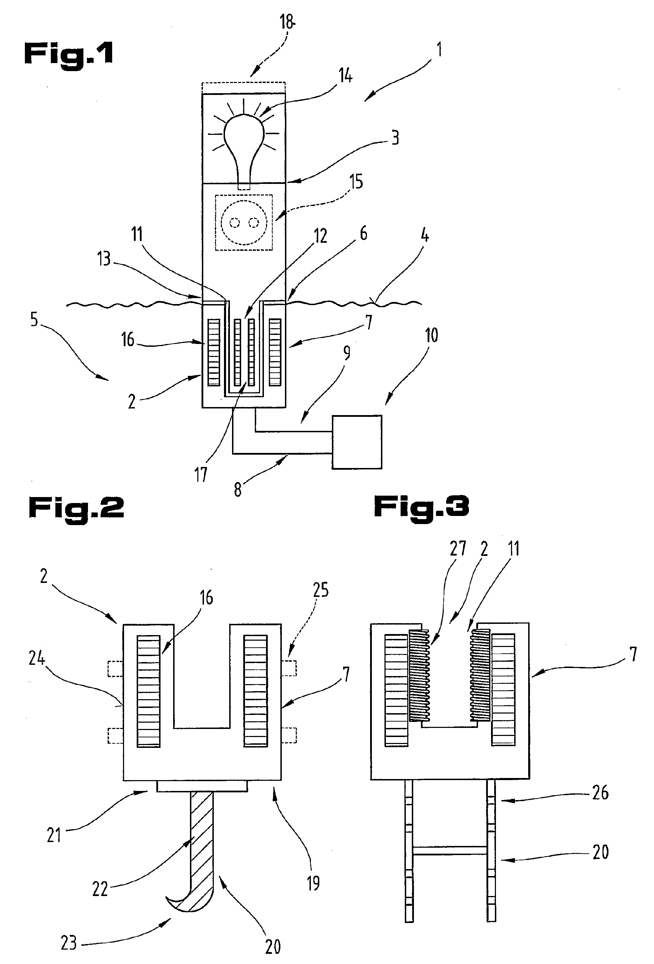

Fig. 1 zeigte eine erste Ausführungsvariante eines Energieversorgungssystems 1. Dieses ist modulartig aufgebaut und umfasst ein Energieversorgungsmodul 2 und ein Energieverbrauchsmodul 3.

Das Energieversorgungsmodul 2 ist unterhalb einer Oberfläche 4 eines Geländebodens 5 angeordnet. Bevorzugt schließt eine Stirnseite 6 zumindest annähernd bündig mit der Oberfläche 4 des Geländebodens 5 ab. Mit zumindest annähernd ist gemeint, dass ein geringfügiges Herausragen des Energieversorgungsmoduls 2 aus dem Geländeboden 5 zulässig ist, wobei Überstände bis zu 1 cm vertretbar sind, ohne dass sich hierdurch das Energieversorgungsmodul 2 negativ auf die Bearbeitung des Geländebodens 5, also z.B. das Rasenmähen, auswirkt.

Der Geländeboden 5 kann beliebiger Art sein, also beispielsweise ein Naturboden, insbesondere mit Rasenbewuchs, sowie ein befestigter Boden, wie Gehwege, Zufahrten zu Häuser, etc. Die Befestigung der Böden kann dabei so ausgestaltet sein, dass entweder in an sich bekannter Weise auf einem Naturboden ein gestampftes Kiesbett erzeugt wird, in welches Pflastersteine oder Natursteine verlegt werden. Ebenso ist es möglich, dass unterhalb dieser Bepflasterung ein Betonboden vorgesehen ist.

Demzufolge bestehen also unterschiedliche Anforderungen bzw. Möglichkeiten, um ein Gehäuse 7 des Energieversorgungsmoduls 2 in diesem Geländeboden 5 anzuordnen. In seiner einfachsten Art kann die Anbringung des Energieversorgungsmoduls 2 im Geländeboden 5 durch einfaches Ausheben einer Vertiefung und Einsetzen des Gehäuses 7 des Energieversorgungsmoduls 2 in diese Ausnehmung sowie anschließendes Hinterfüllen des Gehäuses 2 erfolgen, wie dies in Fig. 1 dargestellt ist. Es sind also u.U. bei Erd- bzw. Lehmöden keine zusätzlichen Maßnahmen zur Verankerung des Energieversorgungsmoduls 2 im Geländeboden 5 erforderlich.

Das Energieversorgungsmodul 2 ist über elektrische Leitungen 8, 9 mit einer primären Energiequelle 10 verbunden. Diese Energiequelle 10 kann z.B. die Energieversorgung eines Hauses, also beispielsweise das Stromnetz, sein. Ebenso ist es möglich, hierfür entsprechende Speichervorrichtungen, wie beispielsweise Akkumulatoren, Batterien, etc. vorzusehen.

Zusätzlich ist es möglich weitere Leitungen vorzusehen, über die eine Datenübertragung erfolgt, falls diese nicht mit den elektrischen Leitungen 8, 9 durchgeführt wird.

Das Energieversorgungsmodul 2 ist mit einer Ausnehmung 11 versehen, in welche ein unterer Energieverbrauchsmodulteil 12 einführbar ist. Dazu kann die Ausnehmung 11 des Energieversorgungsmoduls 2 prinzipiell jeden beliebigen Querschnitt aufweisen, vorzugsweise ist jedoch dieser Querschnitt an den Querschnitt des Energieverbrauchsmodulteils 12 angepasst.

Generell soll an dieser Stelle angemerkt sein, dass sowohl das Energieversorgungsmodul 2 als auch das Energieverbrauchsmodul 3 jede beliebige Raumform aufweisen können, also z.B. quaderförmig, würfelförmig, kugelförmig, etc.. Auch können die Raumformen des unterirdisch angebrachten Energieversorgungsmoduls 2 und des Energieverbrauchsmoduls 3 zueinander unterschiedlich sein, also z.B. das Energieversorgungsmodul 2 zylinderförmig und das Energieverbrauchsmodul 3 kugelförmig.

Bei der Ausführungsvariante nach Fig. 1 ist das Energieverbrauchsmodul 3 ohne zusätzliches Befestigungsmaterial in die Ausnehmung 11 des Energieversorgungsmoduls 2 eingesteckt. Zwischen diesen beiden Modulen kann ein Dichtelement 13, beispielsweise eine Flachdichtung oder ein O-Ring, im Bereich der Stirnseite 6 des Energieversorgungsmoduls 2, gegebenenfalls in einer Nut, vorgesehen sein, um eine größere Dichtheit gegen eindringende Feuchtigkeit zu erhalten.

Der Energieverbrauchsmodulteil 12 weist vorzugsweise einen im Vergleich zum Querschnitt des oberirdisch angeordneten Teils des Energieverbrauchsmoduls 3 geringen Querschnitt auf. Damit wird eine Ausbildung des Energieversorgungssystems 1 erreicht, bei welchem das Energieversorgungsmodul 2 zumindest annähernd bündig mit dem Energieverbrauchsmodul 3 verbunden ist, sodass also keine überstehenden Kanten vorhanden sind.

Selbstverständlich sind aber im Rahmen der Erfindung auch andere Geometrien bzw. Querschnitte möglich, also beispielsweise ein Energieversorgungsmodul 3 mit einem größeren Querschnitt als dem Querschnitt des Energieverbrauchsmoduls 3, sodass also beispielsweise der einsteckbare Energieverbrauchsmodulteil 12 ohne die in Fig. 1 gezeigte Absetzung vom oberirdischen Teil des Energieverbrauchsmoduls 3 ausgebildet sein kann. Des weiteren ist es möglich, dieses Energieversorgungsmodul 2 in seiner Größe so zu bemessen, dass mehrere Aufnahmen für verschiedene Energieverbrauchsmodule 3 vorhanden sind, also gleichzeitig mehrerer dieser Module angeordnet werden können.

Das Energieverbrauchsmodul 3 nach Fig. 1 ist in Form eines Leuchtmoduls ausgebildet und ist hierzu im Energieverbrauchsmodul 3 ein Leuchtmittel 14, also beispielsweise je nach gewünschter Lichtausbeute bzw. Helligkeit bzw. Energieverbrauch zumindest eine LED, eine Glühlampe, eine Xenonlampe, eine Energiesparlampe, eine Halogenlampe oder dgl., in einer entsprechenden Halterung, beispielsweise Fassung, angeordnet.

Des Weiteren kann in diesem Energieverbrauchsmodul 3 zumindest eine Steckdose 15, wie dies in Fig. 1 strichliert angedeutet ist, vorgesehen sein, wobei diese Steckdose 15 dem Stand der Technik ausgebildet und mit einem Deckel als Spritzwasserschutz versehen sein kann. Damit ist dieses Energieverbrauchsmodul 3 nach Fig. 1 sowohl als Leuchtmodul als auch als Steckdosenmodul verwendbar.

Zur Übertragung der elektrischen Energie vom Energieversorgungsmodul 3 auf das Energieverbrauchsmodul 2 ist im Energieversorgungsmodul 3 zumindest eine Primärspule 16 und im Energieverbrauchsmodul 3, d.h. in dessen in das Energieversorgungsmodul 2 einsteckbaren Energieverbrauchsmodulteil 12 zumindest eine Sekundärspule 17 angeordnet. Die Anordnung erfolgt dabei derart bzw. sollen die Spulen in den jeweiligen Modulen so angeordnet sein, dass bei eingestecktem Energieverbrauchsmodul 3 die Sekundärspule 17 zumindest annähernd auf gleicher Höhe der Primärspule 16 liegt, sodass in Art eines Transformators eine induktive Energieübertragung erfolgen kann. Es wird hierdurch der Vorteil erreicht, dass kein direkter elektrischer Kontakt zwischen den beiden Modulen vorhanden sein muss, sodass also die elektrisch leitenden Teile des Energieversorgungsmoduls 2 und des Energieverbrauchsmodul 3 hermetisch von der Umgebung abgeschlossen sein können, also beispielsweise in Kunstharz eingegossen sein können, wodurch die Empfindlichkeit gegen Feuchtigkeit bzw. Nässe in Form von Spritzwasser oder Regen deutlich herabgesetzt werden kann. Es besteht somit keinerlei Gefahr eines elektrischen Kurzschlusses, selbst bei herausgenommenem Energieverbrauchsmodul 3, auch wenn im Energieversorgungsmodul 3 aufgrund von Regenfällen Wasser in der für die Aufnahme des Energieverbrauchsmoduls 3 vorgesehene Ausnehmung 11 enthalten ist.

Da das Energieverbrauchsmodul 3 für den Außenbereich bestimmt ist, beispielsweise als Pollerlampe ausgeführt ist, kann, um damit den Energieverbrauch zu senken, an dem Energieverbrauchsmodul 3, eine Stromerzeugungseinrichtung 18, beispielsweise in Form eines aus dem Stand der Technik bekannten Solarmoduls angeordnet sein.

Sowohl dieses Solarmodul 18 als auch die Sekundärspule 17 können, gegebenenfalls über notwendige Zwischenbausteine, wie beispielsweise einen Wechselrichter, mit den Verbrauchern, wie z.B. dem Leuchtmittel 14 bzw. einer Fassung hierfür, oder der Steckdose 15 in an sich bekannter Weise elektrisch leitend verbunden sein und wurde aus Gründen der Übersichtlichkeit auf die Darstellung dieser Leitungen verzichtet.

In Fig. 2 ist eine Ausführungsvariante des Energieversorgungsmoduls 2 gezeigt, welche sich insbesondere zur Anordnung in befestigten Geländeböden 5 (in Fig. 2 nicht dargestellt) eignet. Dazu kann an einer Unterseite 19, also jener Seite des Energieversorgungsmoduls 2, welche vom Energieverbrauchsmodul 3 abgewendet ist, ein Betonanker 20 vorgesehen sein, um diesen während des Betonierens in den noch nicht verfestigten Beton einzudrücken und damit eine entsprechende Verankerung des Energieversorgungsmoduls 2 zu erreichen. Dieser Betonanker 20 kann in Form eines, über ein Verbindungselement 21 mit dem Gehäuse 7 des Energieversorgungsmoduls 2 verbundenen, beispielsweise verschraubten, Rundstahlstiftes, der gegebenenfalls spiralförmig angeordnete Rippen 22 aufweist, ausgebildet sein. Selbstverständlich ist die direkte Anordnung dieses Betonankers 20 ohne die Zwischenanordnung des Verbindungselementes 21 am Gehäuse 7 möglich.

Um die Ausreißfestigkeit bzw. Haltekraft zu erhöhen, kann der Betonanker 20 in einem, von der Unterseite 19 abgekehrten Endbereich 23 zumindest annähernd hackenförmig ausgebildet sein.

Auch bei dieser Ausführungsvariante des Energieversorgungsmoduls 2 ist dieses mit der zumindest einen Primärspule 16 zur Energieübertragung ausgestattet.

Generell sei darauf hingewiesen, dass bei sämtlichen Ausführungsvarianten einzelne Details der anderen, dargestellten und beschriebenen Varianten verwendet werden können, selbst wenn diese bei der konkreten Darstellung nicht gezeigt bzw. in der entsprechenden Beschreibung hierzu nicht angeführt werden.

Obwohl das Energieversorgungsmodul 2 nach Fig. 2 speziell für befestigte Geländeböden 5 verwendet werden kann, steht einer Verwendung desselben in Naturböden, also in Erdböden, nichts entgegen.

Alternativ zu dem Betonanker 20 oder zusätzlich hierzu kann das Gehäuse 7, wie dies in Fig. 2 strichliert dargestellt ist, an einer Gehäusemanteloberfläche 24 zumindest einen, bevorzugt umlaufenden, Steg 25 - bei der Ausführungsvariante nach Fig. 2 sind zwei derartige Stege 25 vorgesehen - aufweisen, um eine seitliche Verkrallung bzw. bessere Halterung des Energieversorgungsmoduls 2 im Geländeboden 5 durch das Bodenmaterial zu erhalten.

In Fig. 3 ist eine weitere Variante des Betonankers 20 dargestellt. Dieser ist bei dieser Ausführungsvariante direkt am Gehäuse 7 des Energieversorgungsmoduls 2 befestigt und - in Seitenansicht betrachtet - zumindest annähernd H-förmig ausgebildet. Selbstverständlich können anstelle dieser H-Form auch ein bzw. mehrere einzelne Flacheisen als Betonanker 20 vorgesehen sein. Um die Halterung bzw. die Ausreißfestigkeit des Energieversorgungsmoduls 2 im Geländeboden 5 (nicht dargestellt) zu verbessern, kann dieser zumindest eine Betonanker 20 zumindest einen Durchbruch 26 aufweisen, der von dem jeweiligen Bodenmaterial durchdrungen wird, also beispielsweise von Beton, sodass nach dessen Verfestigung der Betonanker 20 fest im Beton sitzt.

Bei dieser Ausführungsvariante des Energieversorgungsmoduls 2 erfolgt die Verbindung mit dem nicht dargestellten Energieverbrauchsmodul 3, beispielsweise nach Fig. 1, über eine Schraubverbindung, wozu in der Ausnehmung 11 zur Aufnahme des Energieverbrauchsmodulteils 12 ein entsprechendes Innengewinde 27 vorgesehen sein kann. Der Energieverbrauchsmodulteil 12 weist hierzu ein korrespondierendes Außengewinde auf.

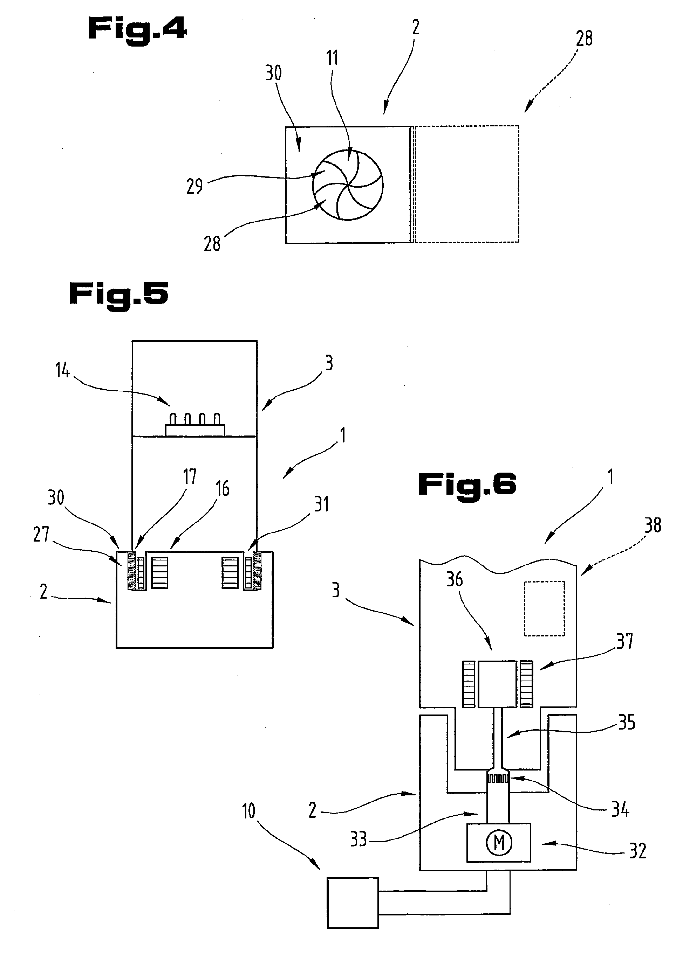

In Fig. 4 ist einer Draufsicht auf das Energieversorgungsmodul 2 gezeigt. Dieses weist einen zumindest annähernd quadratischen bzw. rechteckförmigen Querschnitt auf, kann aber auch selbstverständlich auch andere, beliebige Querschnittsformen, also auch polygonale, wie pentagonale, hexagonale, oktogonale, etc., Querschnitte aufweisen. Ebenso sind runde, ovale Querschnitte oder dgl. möglich.

Die Ausnehmung 11 für die Aufnahme des Energieverbrauchmodulteils 12 ist bei dieser Ausführungsvariante des Energieversorgungsmoduls 2 mit einem Abdeckelement 28 versehen. Das Abdeckelement 28 kann gemäß einer ersten Ausführungsvariante mehrere Abdeckflügel 29 aufweisen, die in Art einer Ringblende, wie diese aus dem Fotobereich bekannt ist, zusammenwirken. Wird nun das Energieverbrauchsmodul 3 in diese Ausnehmung 11 eingeführt, weichen diese Abdeckflügel 29 zur Seite und geben die Ausnehmung 11 frei, sodass das Einschieben ermöglicht wird. Umgekehrt wird beim Herausziehen des Energieverbrauchsmoduls 3 aus der Ausnehmung 11 diese bevorzugt automatisch durch die z.B. über Federn vorgespannten Abdeckflügel 29 verschlossen.

Selbstverständlich kann dieses Abdeckelement 28 auch ausschließlich manuell bedienbar ausgeführt sein, also beispielsweise mit einem entsprechenden Schieberelement, mit dessen Hilfe das Abdeckelement 28 über die Ausnehmung 11 verbracht wird.

Des Weiteren ist es möglich, wie in Fig. 4 strichliert angedeutet, dass das Abdeckelement 28 in Form einer, bevorzugt federvorgespannten, Abdeckklappe ausgeführt ist, welche aufgrund der Federvorspannung nach dem Herausziehen des Energieverbrauchmoduls 3 aus der Ausnehmung 11 diese selbsttätig verschließt. Diese Ausführungsvariante hat jedoch den Nachteil, dass die Abdeckklappe bzw. das Abdeckelement 28 manuell vor dem Einführen des Energieverbrauchsmoduls 3 in die Ausnehmung 11 geöffnet werden muss. Allerdings kann mit einem derartigen Abdeckelement 28 der Vorteil erreicht werden, insbesondere wenn es eine Stirnfläche 30 des Energieversorgungsmoduls 2 vollständig übergreifend, also geringfügig größer und mit entsprechenden, nach unten, im geschlossenen Zustand gesehen, gerichteten Stegen ausgeführt ist, eine höhere Dichtigkeit erzielt werden.

Bei der Ausführungsvariante des Energieversorgungssystems 1 nach Fig. 5 ist das Energieversorgungsmodul 2 im Querschnitt (in Draufsicht betrachtet) größer ausgebildet, als der Querschnitt des Energieverbrauchsmoduls 3. In der Stirnfläche 30 des Energieversorgungsmoduls 2 ist eine Ringnut 31 vorgesehen, welche mit dem Innengewinde 27 ausgestattet ist. In diese Ringnut 31 wird nun das Energieverbrauchsmodul 3, welches ein entsprechendes Außengewinde aufweist, eingesetzt, und mit dem Energieversorgungsmodul 2 verschraubt. Um die Dichtheit dabei weiter zu erhöhen, können wiederum entsprechende Dichtelemente 13 in dieser Ringnut 31 vorgesehen sein (in Fig. 5 nicht dargestellt). Des Weiteren erfolgt auch bei dieser Ausführungsvariante die Energieübertragung induktiv über die Primärspule 16 sowie die Sekundärspule 17 eines Transformators im Energieversorgungsmodul 2 bzw. Energieverbrauchsmodul 3.

Als Leuchtmittel 14 sind bei dieser Variante der Erfindung mehrere LED's vorgesehen. Diese können gleichfärbig ausgestattet sein, es ist aber auch möglich, unterschiedliche Farben als Leuchtmittel 14 vorzusehen, sodass mit dem Leuchtmodul nicht nur eine Beleuchtung erfolgen kann, sondern beispielsweise dieses auch als Signalsystem durch die jeweils zu verschiedenen Zeiten aktivierbaren unterschiedlichen Farben.

Neben der beschriebenen Schraubverbindung zwischen dem Energieversorgungsmodul 2 und dem Energieverbrauchsmodul 3, ist es im Rahmen der Erfindung auch möglich, andere mechanische Verbindungen vorzusehen, wie beispielsweise einen Bajonettverschluss, eine Schnappverbindung, eine Rastverbindung oder einen Schnellspannverschluss, wodurch das Anordnen bzw. Entfernen des Energieverbrauchmoduls 3 schneller und einfacher möglich wird.

Alternativ hierzu kann die Verbindung zwischen dem Energieversorgungsmodul 2 und dem Energieverbrauchsmodul 3 als reine Steckverbindung mit Reibschluss ausgeführt sein bzw. kann in einem Bodenbereich der Ausnehmung 11 ein Magnetelement vorgesehen sein, welches mit einem weiteren Magnetelement, das im einsteckbaren Energieverbrauchsmodulteil 12 angeordnet ist, zusammenwirkt bzw. wenn das Energieverbrauchsmodul 3 zumindest teilweise metallisch ausgeführt ist, dieses aufgrund der magnetischen Kräfte festhält.

Selbstverständlich ist es möglich, dass mehrere Verbindungsmethoden bzw. mehrere unterschiedliche Verbindungselemente angeordnet werden, um die Verbindung zwischen dem Energieversorgungsmodul 2 und dem Energieverbrauchsmodul 3 zu verstärken.

Fig. 6 zeigt schließlich eine Variante des Energieversorgungssystems 1, bei der die Energieübertragung zwischen dem Energieversorgungsmoduls 2 und dem Energieverbrauchsmoduls 3 nicht induktiv erfolgt, sondern primär kinetische Energie übertragen wird. Dazu kann im Energieversorgungsmodul 2 ein Antriebsmodul, beispielsweise ein Motor 32, vorgesehen sein, der einerseits mit der Energiequelle 10, gegebenenfalls unter Zwischenschaltung weiterer Elemente, verbunden ist und andererseits ein Drehelement 33 in Drehbewegung versetzt. Das Drehelement 33 weist an seiner, dem Energieverbrauchsmodul 3 zugewandten Oberfläche beispielsweise eine Zahnung 34 auf. Diese kann auch in Form eines Zahnrades oder dgl. ausgeführt sein.

Mit dem Drehelement 33 in Eingriff steht ein weiteres Drehelement 35, welches im Energieverbrauchsmodul 3 angeordnet und mit einem Läufer 36 eines Generators 37 verbunden ist. Durch diesen Generator 37 wird in an sich bekannter Weise die Drehbewegung, d.h. die kinetische Energie, in elektrische Energie umgewandelt. Die Verbindung zwischen den Drehelementen 33, 35 kann in an sich bekannter Weise beispielsweise über Zahnräder erfolgen.

Strichliert ist in Fig. 6 angedeutet, dass im Energieverbrauchsmodul 3 auch ein Datenspeicher 38 bzw. ein Speicherelement generell, angeordnet sein kann, um beispielsweise die Signalabfolge bei mehreren angeordneten, unterschiedlich färbigen Leuchtmitteln 14 (sieh z.B. Fig. 5) zu regeln bzw. zu steuern. Dieser Datenspeicher 38 kann auch dazu verwendet werden, um Daten, welche von Sensoren zu Verfügung gestellt werden, beispielsweise die Anzahl der aus- und einfahrenden Fahrzeuge auf einem Parkplatz, zu erfassen, um gegebenenfalls bei ausgelastetem Parkplatz dies den weiter, einfahrenden Fahrzeugen durch rotes Signallicht anzuzeigen. In dem Speicherelement können aber auch Programme hinterlegt sein, welche beispielsweise für die Verkehrsleitung, bei Verwendung des Energieversorgungssystems 1 als Verkehrsleitsystem, benötigt werden.

Unabhängig davon kann im Energieverbrauchsmodul 3, insbesondere wenn dies als Leuchtmodul ausgeführt ist, auch ein Bewegungsmelder angeordnet sein, um einerseits das Einschalten des Lichtes automatisch zu bewirken wenn sich eine Person nähert bzw. um damit auch Energie zu sparen, indem das Abschalten des Leuchtmoduls nicht vergessen werden kann.

Das Energieversorgungsmodul 2 ist erfindungsgemäß für den unterflurigen Einbau in den Geländeboden 5 vorgesehen. Es erweist sich daher von Vorteil, wenn das Gehäuse 7 des Energieversorgungsmoduls 2 aus einem begehbaren bzw. befahrbaren Werkstoff ist, insbesondere wenn das Energieversorgungssystem 3 auf befestigten Flächen, wie z.B. Straßen, insbesondere im Bereich zwischen zwei Richtungsfahrbahnen, Parkplätzen oder dgl., verwendet wird. Derartige Werkstoffe können beispielsweise entsprechende Kunststoffe, Metalle, etc. sein, sodass der Gefahr eines Bruches des Gehäuses 7 und damit gegebenenfalls eine Zerstörung des Energieversorgungsmoduls 2 auch bei mangelhafter Hinterfüllung desselben wirkungsvoll entgegen getreten werden kann.

Die Energieübertragung bzw. die Datenübertragung zwischen dem Energieversorgungsmodul 2 und dem Energieverbrauchsmodul 3 kann, wenn diese induktiv ausgeführt ist, im Hochfrequenzbereich erfolgen, die Frequenz kann also beispielsweise aus einem Bereich zwischen 5 kHz und 1 GHz ausgewählt sein, beispielsweise 10 kHz betragen, wozu das Energieversorgungsmodul 2 entsprechend ausgebildet sein kann. Es wird hiermit der Vorteil erreicht, dass Übertragungsverluste minimiert bzw. auf einem sehr geringen Niveau gehalten werden können. Alternativ hierzu ist es möglich, beispielsweise um Daten bzw. Programme in den Datenspeicher einzuspeisen, dieses Energieversorgungsmodul 2 zur Niederfrequenzübertragung auszubilden.

Wie bereits erwähnt, kann das Energieversorgungssystem 1 nicht nur zur Beleuchtung von Außenanlagen, z.B. von Häusern, Rasenflächen, Gehwegen, Zufahrten etc. verwendet werden. Eine der bevorzugten, möglichen anderen Anwendungen bzw. Verwendungen des Energieversorgungssystems 1 ist dessen Anordnung auf Verkehrsflächen, also beispielsweise Straßen, Tunnel oder dgl., und das Energieversorgungssystem 2 als Leitsystem bzw. Tunnelsicherungssystem auszubilden, wozu insbesondere das Energieverbrauchsmodul 3 als Leuchtmodul ausgeführt sein kann, und in diesem mehrere, verschieden färbige Leuchtmittel 14 angeordnet sein können. Für diesen Verwendungszweck ist es vorteilhaft, wenn das Energieverbrauchsmodul 3 in einem Übergangsbereich, zwischen dem einsteckbaren Energieverbrauchsmodulteil 12 und jenem Bereich, in dem die Leuchtmittel 14 angeordnet sind, zumindest teilweise aus einem elastischen Material zu bilden, bzw. mit einem elastischen Material zu versehen, um damit die Zerstörung des Energieverbrauchsmoduls, beispielsweise durch anfahrende PKW's zu vermeiden.

Selbstverständlich ist es im Rahmen der Erfindung möglich, mehrere Energieversorgungssysteme 1 zu verwenden, beispielsweise zur Abtrennung von Fahrbahnen bzw. generell als Leitsystem.

Daneben kann das Energieversorgungssystem 1 ganz generell als Signalsystem, oder aber auch als Orientierungssystem, beispielsweise auf Parkflächen, verwendet werden.

Der Ordnung halber sei abschließend darauf hingewiesen, dass zum besseren Verständnis des Aufbaus des Energieversorgungssystems (1) dieses bzw. dessen Bestandteile teilweise unmaßstäblich und/oder vergrößert und/oder verkleinert dargestellt wurden.

### Bezugszeichenaufstellung

- 1: Energieversorgungssystem
- 2: Energieversorgungsmodul
- 3: Energieverbrauchsmodul
- 4: Oberfläche
- 5: Geländeboden

- 6: Stirnseite
- 7: Gehäuse
- 8: Leitung
- 9: Leitung
- 10: Energiequelle

- 11: Ausnehmung
- 12: Energieverbrauchsmodulteil
- 13: Dichtelement
- 14: Leuchtmittel
- 15: Steckdose

- 16: Primärspule
- 17: Sekundärspule
- 18: Stromerzeugungseinrichtung
- 19: Unterseite
- 20: Betonanker

- 21: Verbindungselement
- 22: Rippen
- 23: Endbereich
- 24: Gehäusemanteloberfläche
- 25: Steg

- 26: Durchbruch
- 27: Innengewinde
- 28: Abdeckelement
- 29: Abdeckflügel
- 30: Stirnfläche

- 31: Ringnut
- 32: Motor
- 33: Drehelement
- 34: Zahnung
- 35: Drehelement

- 36: Läufer
- 37: Generator
- 38: Datenspeicher

## Patentansprüche

1. Beleuchtung für eine Außenanlage mit einem Energieversorgungssystem (1) zur Versorgung eines Verbrauchers mit elektrischem Strom umfassend zumindest ein Energieversorgungsmodul (2), das mit einer Energiequelle (10) verbunden bzw. verbindbar ist, und zumindest ein Energieverbrauchsmodul (3), wobei das Energieversorgungsmodul (2) bevorzugt mit einem Gehäuse (7) zum Unterflureinbau ausgebildet ist und im Energieverbrauchsmodul (3) ein Datenempfangsmodul angeordnet ist bzw. ein Datenempfangsmodul durch das Energieverbrauchsmodul gebildet ist, wobei zur induktiven Datenübertragung zwischen dem Energieversorgungsmodul (2) und dem Energieverbrauchsmodul (3) sowohl das Energieversorgungsmodul (2) als auch das Energieverbrauchsmodul (3) mit je zumindest einer elektrischen Wicklung eines Transformators ausgestattet ist oder zur Datenübertragung ein opto-elektronisches Bauelement mit einem lichtemittierenden Bauteil im Energieversorgungsmodul (2) und einem lichtempfangenden Bauteil im Energieverbrauchsmodul (3) angeordnet ist, **dadurch gekennzeichnet, dass** das Energieverbrauchsmodul (3) lösbar und elektrisch entkoppelt mit dem Energieversorgungsmodul (2) verbunden bzw. verbindbar ist.

2. Beleuchtung nach Anspruch 1, **dadurch gekennzeichnet, dass** an einer Außenseite des Gehäuses (7) zumindest ein, bevorzugt umlaufender, Steg (25) angeordnet ist.

3. Beleuchtung nach Anspruch 1 oder 2, **dadurch gekennzeichnet, dass** an dem Gehäuse (7) zumindest ein Betonanker (20) angeordnet ist.

4. Beleuchtung nach Anspruch 3, **dadurch gekennzeichnet, dass** der zumindest eine Betonanker (20) zumindest einen Durchbruch (26) aufweist.

5. Beleuchtung nach einem der vorhergehenden Ansprüche, **dadurch gekennzeichnet, dass** an bzw. in dem Energieversorgungsmodul (2) ein Abdeckelement (28) für eine, einen Energieverbrauchsmodulteil (12) aufnehmende Ausnehmung (11) angeordnet ist.

6. Beleuchtung nach Anspruch 5, **dadurch gekennzeichnet, dass** das Abdeckelement (28) selbstverschließend ausgebildet ist.

7. Beleuchtung nach Anspruch 5 oder 6, **dadurch gekennzeichnet, dass** das Abdeckelement (28) mehrere Abdeckflügel (29) aufweist, die ringblendenartig zusammenwirken.

8. Beleuchtung nach einem der vorhergehenden Ansprüche, **dadurch gekennzeichnet, dass** das Gehäuse (7) und/oder das Abdeckelement (28) aus einem begehbaren bzw. befahrbaren Werkstoff bestehen.

9. Beleuchtung nach einem der vorhergehenden Ansprüche, **dadurch gekennzeichnet, dass** Energieverbrauchsmodul (3) als Leuchtmodul ausgebildet ist.

10. Beleuchtung nach einem der vorhergehenden Ansprüche, **dadurch gekennzeichnet, dass** das Energieverbrauchsmodul (3) als Steckdosenmodul ausgebildet ist.

11. Beleuchtung nach einem der vorhergehenden Ansprüche, **dadurch gekennzeichnet, dass** im Energieverbrauchsmodul (3) zumindest eine Stromerzeugungseinrichtung (18) angeordnet ist.

12. Beleuchtung nach Anspruch 11, **dadurch gekennzeichnet, dass** die Stromerzeugungseinrichtung (18) ein Solarmodul ist.

13. Beleuchtung nach Anspruch 11 oder 12, **dadurch gekennzeichnet, dass** die Stromerzeugungseinrichtung (18) aus mechanischen Komponenten aufgebaut ist.

14. Beleuchtung nach einem der vorhergehenden Ansprüche, **dadurch gekennzeichnet, dass** das Energieversorgungsmodul (2) zur Hochfrequenzübertragung ausgebildet ist.

15. Beleuchtung nach einem der vorhergehenden Ansprüche, **dadurch gekennzeichnet, dass** das Energieversorgungsmodul (2) zur Niederfrequenzübertragung ausgebildet ist.

16. Beleuchtung nach einem der vorhergehenden Ansprüche, **dadurch gekennzeichnet, dass** das Energieversorgungsmodul (2) mechanisch mit dem Energieverbrauchsmodul (3) verbunden ist.

17. Beleuchtung nach Anspruch 16, **dadurch gekennzeichnet, dass** die mechanische Verbindung des Energieversorgungsmoduls (2) mit dem Energieverbrauchsmodul (3) ein Bajonettverschluss, eine Schnappverbindung, eine Rastverbindung, eine Schraubverbindung oder ein Schnellspannverschluss ist.

18. Beleuchtung nach einem der vorhergehenden Ansprüche, **dadurch gekennzeichnet, dass** an einer dem Energieverbrauchsmodul (3) zugekehrten Oberfläche des Energieversorgungsmoduls (2) zumindest ein Magnet angeordnet ist.

19. Beleuchtung nach einem der vorhergehenden Ansprüche, **dadurch gekennzeichnet, dass** das Energieverbrauchsmodul (3) in das Energieversorgungsmodul (2) einsteckbar ausgebildet ist.

20. Beleuchtung nach einem Ansprüche 9 bis 19, **dadurch gekennzeichnet, dass** im Leuchtmodul zumindest ein Leuchtmittel (14) in Form eines LED, einer Glühlampe, einer Xenonlampe, einer Energiesparlampe oder einer Halogenlampe angeordnet ist.

21. Beleuchtung nach Anspruch 20, **dadurch gekennzeichnet, dass** im Leuchtmodul mehrere Leuchtmittel (14) mit unterschiedlicher Farbe angeordnet sind.

22. Beleuchtung nach einem der vorhergehenden Ansprüche, **dadurch gekennzeichnet, dass** im Energieverbrauchsmodul (3) zumindest ein Datenspeicher (38) angeordnet ist.

23. Beleuchtung nach einem der vorhergehenden Ansprüche, **dadurch gekennzeichnet, dass** im Energieverbrauchsmodul (3) ein Bewegungsmelder angeordnet ist.

24. Beleuchtung nach einem der vorhergehenden Ansprüche 9 bis 23, **dadurch gekennzeichnet, dass** das Leuchtmodul zwischen dem Verbindungsbereich mit dem Energieversorgungsmodul (2) und dem Leuchtmittel (14) einen elastisch nachgebenden Bereich aufweist.

25. Beleuchtung nach einem der vorhergehenden Ansprüche, **dadurch gekennzeichnet, dass** im Energieverbrauchsmodul (3) ein Energiespeicher angeordnet ist.

## Claims

1. Lighting for an external facility with an energy supply system (1) for purposes of supplying a load with electrical power, comprising at least one energy supply module (2) which is connected, or can be connected, with an energy source (10), and at least one consumer module (3), wherein the energy supply module (2) is preferably designed with a housing (7) for underfloor installation, and a data reception module is arranged in the consumer module (3), or a data reception module is formed by means of the consumer module, wherein for purposes of inductive data transfer between the energy supply module (2) and the consumer module (3) both the energy supply module (2) and also the consumer module (3) are each fitted with at least one electrical coil of a transformer, or for purposes of data transfer an optoelectronic element is arranged with a light-emitting component in the energy supply module (2) and a light-receiving component in the consumer module (3), **characterised in that**, the consumer module (3) is connected, or can be connected, with the energy supply module (2) such that it can be detached and electrically decoupled from the latter.

2. The lighting in accordance with Claim 1, **characterised in that**, at least one, preferably peripheral, web (25) is arranged on an outer face of the housing (7).

3. The lighting in accordance with Claim 1 or 2, **characterised in that**, at least one concrete anchor (20) is arranged on the housing (7).

4. The lighting in accordance with Claim 3, **characterised in that**, the at least one concrete anchor (20) has at least one opening (26).

5. The lighting in accordance with one of the preceding claims, **characterised in that**, a cover element (28) is arranged on, or in, the energy supply module (2) for a cut-out (11) accommodating part of the consumer module (12).

6. The lighting in accordance with Claim 5, **characterised in that**, the cover element (28) is designed to be self-closing.

7. The lighting in accordance with Claim 5 or 6, **characterised in that**, the cover element (28) has a plurality of cover plates (29), which operate together in the manner of a circular diaphragm.

8. The lighting in accordance with one of the preceding claims, **characterised in that**, the housing (7), and/or the cover element (28) consist of material that can be walked on or driven on.

9. The lighting in accordance with one of the preceding claims, **characterised in that**, the consumer module (3) is designed as a lighting module.

10. The lighting in accordance with one of the preceding claims, **characterised in that**, the consumer module (3) is designed as a socket module.

11. The lighting in accordance with one of the preceding claims, **characterised in that**, at least one power generation unit (18) is arranged in the consumer module (3).

12. The lighting in accordance with Claim 11, **characterised in that**, the power generation unit (18) is a solar module.

13. The lighting in accordance with Claim 11 or 12, **characterised in that**, the power generation unit (18) is constructed from mechanical components.

14. The lighting in accordance with one of the preceding claims, **characterised in that**, the energy supply module (2) is designed for high-frequency transmission.

15. The lighting in accordance with one of the preceding claims, **characterised in that**, the energy supply module (2) is designed for low-frequency transmission.

16. The lighting in accordance with one of the preceding claims, **characterised in that**, the energy supply module (2) is mechanically connected with the consumer module (3).

17. The lighting in accordance with Claim 16, **characterised in that**, the mechanical connection of the energy supply module (2) with the consumer module (3) is a bayonet fastening, a snap connection, a latch connection, a screw connection, or a quick-action fastening.

18. The lighting in accordance with one of the preceding claims, **characterised in that**, at least one magnet is arranged on a surface of the energy supply module (2) facing towards the consumer module (3).

19. The lighting in accordance with one of the preceding claims, **characterised in that**, the consumer module (3) is designed such that it can be plugged into the energy supply module (2).

20. The lighting in accordance with one of the Claims 9 to 19, **characterised in that**, at least one lighting means (14) in the form of an LED, an incandescent lamp, a xenon lamp, an energy-saving lamp, or a halogen lamp, is arranged in the lighting module.

21. The lighting in accordance with Claim 20, **characterised in that**, a plurality of lighting means (14) with different colours are arranged in the lighting module.

22. The lighting in accordance with one of the preceding claims, **characterised in that**, at least one data store (38) is arranged in the consumer module (3).

23. The lighting in accordance with one of the preceding claims, **characterised in that**, a motion detector is arranged in the consumer module (3).

24. The lighting in accordance with one of the preceding Claims 9 to 23, **characterised in that**, the lighting module has an elastically yielding region between the connection region with the energy supply module (2) and the lighting means (14).

25. The lighting in accordance with one of the preceding claims, **characterised in that**, an energy store is arranged in the consumer module (3).

## Revendications

1. Éclairage pour une installation extérieure avec un système de fourniture d'énergie (1) destiné à fournir un courant électrique à un consommateur, comportant au moins un module de fourniture d'énergie (2) qui est relié ou peut être relié à une source d'énergie (10), et au moins un module de consommation d'énergie (3), le module de fourniture d'énergie (2) étant réalisé de préférence avec un boîtier (7) pour un montage souterrain, et un module de réception de données étant disposé dans le module de consommation d'énergie (3) ou un module de réception de données étant constitué par le module de consommation d'énergie, tant le module de fourniture d'énergie (2) que le module de consommation d'énergie (3) étant équipés chacun d'au moins une bobine électrique d'un transformateur en vue de la transmission inductive des données entre le module de fourniture d'énergie (2) et le module de consommation d'énergie (3), ou en vue de la transmission des données, un élément électronique avec un composant émettant la lumière étant agencé dans le module de fourniture d'énergie (2) et avec un élément captant la lumière étant agencé dans le module de consommation d'énergie (3), **caractérisé en ce que** le module de consommation d'énergie (3) est relié ou peut être relié au module de fourniture d'énergie (2) de manière amovible et électriquement découplée.

2. Éclairage selon la revendication 1, **caractérisé en ce qu'**au moins une nervure (25), de préférence périphérique, est disposée sur une face extérieure du boîtier (7).

3. Éclairage selon la revendication 1 ou 2, **caractérisé en ce qu'**au moins un tirant à béton (20) est agencé sur le boîtier (7).

4. Éclairage selon la revendication 3, **caractérisé en ce que** ledit au moins un tirant à béton (20) comporte au moins une percée (26).

5. Éclairage selon l'une quelconque des revendications précédentes, **caractérisé en ce que** sur ou dans le module de fourniture d'énergie (2) est agencé un élément de recouvrement (28) pour un évidement (11) recevant une partie (12) du module de consommation d'énergie.

6. Éclairage selon la revendication 5, **caractérisé en ce que** l'élément de recouvrement (28) est réalisé de manière auto-verrouillable.

7. Éclairage selon la revendication 5 ou 6, **caractérisé en ce que** l'élément de recouvrement (28) comporte plusieurs ailettes de recouvrement (29) qui coopèrent à la manière d'un diaphragme circulaire.

8. Éclairage selon l'une quelconque des revendications précédentes, **caractérisé en ce que** le boîtier (7) et/ou l'élément de recouvrement (28) sont réalisés dans un matériau praticable pour marcher ou rouler.

9. Éclairage selon l'une quelconque des revendications précédentes, **caractérisé en ce que** le module de consommation d'énergie (3) est réalisé sous la forme d'un module d'éclairage.

10. Éclairage selon l'une quelconque des revendications précédentes, **caractérisé en ce que** le module de consommation d'énergie (3) est réalisé sous la forme d'un module de prise de courant.

11. Éclairage selon l'une quelconque des revendications précédentes, **caractérisé en ce que** dans le module de consommation d'énergie (3) est agencé au moins un dispositif produisant de l'électricité (18).

12. Éclairage selon la revendication 11, **caractérisé en ce que** le dispositif produisant de l'électricité (18) est un module solaire.

13. Éclairage selon la revendication 11 ou 12, **caractérisé en ce que** le dispositif produisant de l'électricité (18) est constitué par des composants mécaniques.

14. Éclairage selon l'une quelconque des revendications précédentes, **caractérisé en ce que** le module de fourniture d'énergie (2) est réalisé pour la transmission à haute fréquence.

15. Éclairage selon l'une quelconque des revendications précédentes, **caractérisé en ce que** le module de fourniture d'énergie (2) est réalisé pour la transmission à basse fréquence.

16. Éclairage selon l'une quelconque des revendications précédentes, **caractérisé en ce que** le module de fourniture d'énergie (2) est assemblé mécaniquement au module de consommation d'énergie (3).

17. Éclairage selon la revendication 16, **caractérisé en ce que** l'assemblage mécanique entre le module de fourniture d'énergie (2) et le module de consommation d'énergie (3) est un assemblage à baïonnette, un assemblage encliquetable, un assemblage à crans d'arrêt, un assemblage vissé ou un assemblage à serrage rapide.

18. Éclairage selon l'une quelconque des revendications précédentes, **caractérisé en ce qu'**au moins un aimant est agencé sur une surface du module de fourniture d'énergie (2), laquelle est orientée vers le module de consommation d'énergie (3).

19. Éclairage selon l'une quelconque des revendications précédentes, **caractérisé en ce que** le module de consommation d'énergie (3) est réalisé de manière à pouvoir être enfiché dans le module de fourniture d'énergie (2).

20. Éclairage selon l'une quelconque des revendications 9 à 19, **caractérisé en ce que** dans le module d'éclairage est agencé au moins un moyen d'éclairage (14) sous la forme d'une diode électroluminescente, d'une lampe à incandescence, d'une lampe xénon, d'une lampe à économie d'énergie ou d'une lampe halogène.

21. Éclairage selon la revendication 20, **caractérisé en ce que** plusieurs moyens d'éclairage (14) de couleurs différentes sont agencés dans le module d'éclairage.

22. Éclairage selon l'une quelconque des revendications précédentes, **caractérisé en ce qu'**au moins une mémoire de données (38) est agencée dans le module de consommation d'énergie (3).

23. Éclairage selon l'une quelconque des revendications précédentes, **caractérisé en ce qu'**un capteur de mouvement est agencé dans le module de consommation d'énergie (3).

24. Éclairage selon l'une quelconque des revendications 9 à 23, **caractérisé en ce que** le module d'éclairage comporte une zone élastiquement flexible entre la zone d'assemblage avec le module de fourniture d'énergie (2) et le moyen d'éclairage (14).

25. Éclairage selon l'une quelconque des revendications précédentes, **caractérisé en ce qu'**un accumulateur d'énergie est agencé dans le module de consommation d'énergie (3).
